# EUROPÄISCHE PATENTSCHRIFT

(11) **EP 2 534 384 B1**
(45) Veröffentlichungstag und Bekanntmachung des Hinweises auf die Patenterteilung: **09.04.2014**
(21) Anmeldenummer: 11703209.4
(22) Anmeldetag: 08.02.2011
(51) Int. Cl.: F16B 21/18, F16B 21/20

(54) **KLEMMSCHEIBE SOWIE NOCKENVERSTELLEINHEIT**
CLAMPING DISK AND CAM ADJUSTING UNIT
DISQUE DE SERRAGE ET UNITÉ DE RÉGLAGE DE CAMES

(30) Priorität: 09.02.2010 DE 102010007488
(43) Veröffentlichungstag der Anmeldung: 19.12.2012
(73) Patentinhaber: Schaeffler Technologies GmbH & Co. KG, 91074 Herzogenaurach (DE)
(72) Erfinder: OTTERSBACH, Rainer, 91086 Aurachtal (DE); BETZ, Christoph, 91093 Untermembach / Hessdorf (DE); HERZOG, Rüdiger, 96114 Hirschaid (DE); CHRISTEL, Stefan, 96193 Wachenroth (DE); SEBALD, Stefan, 91344 Waischenfeld (DE); STOLLBERGER, Uwe, 96173 Staffelbach (DE)
(86) Internationale Anmeldenummer: PCT/EP2011/051796
(87) Internationale Veröffentlichungsnummer: WO 2011/098441

(56) Entgegenhaltungen:
- EP-A1- 0 019 361
- EP-A1- 0 611 008
- EP-A2- 1 050 665
- EP-A2- 1 693 588
- DE-A1- 2 105 990
- DE-A1- 19 936 708
- DE-A1-102005 042 346
- DE-C1- 4 444 922
- GB-A- 359 836
- GB-A- 1 416 067
- US-A- 2 131 948
- US-A- 3 102 508
- US-A- 4 183 280
- US-A- 5 195 860
- US-A- 5 713 692

## Beschreibung

### Gebiet der Erfindung

Die Erfindung betrifft eine Klemmscheibe zur kraftschlüssigen Verbindung von Bauteilen in einem Nockenwellenverstellsystem, insbesondere zu einer kraftschlüssigen Verbindung einer Nockenwellenverstelleinheit, umfassend einen Rotor und einen Stator, mit einer Nockenwelle einer Brennkraftmaschine. Die Erfindung betrifft weiter eine Nockenwellenverstelleinheit mit einer derartigen Klemmscheibe. Desweiteren betrifft die Erfindung ein Verfahren zur Überprüfung der Montage der Klemmscheibe.

### Hintergrund der Erfindung

Ein Nockenwellenverstellsystem dient zur Verstellung der Phasenlage zwischen einer Nockenwelle und einer Kurbelwelle in einer Brennkraftmaschine. Dazu ist üblicherweise ein Rotor drehbeweglich in einem Stator gelagert. Der Stator des Nockenwellenverstellsystems ist drehfest mit der Kurbelwelle verbunden. Der Rotor ist drehfest mit der Nockenwelle gekoppelt. Über eine Relativdrehung des Rotors gegenüber dem Stator wird die Phasenlage zwischen Kurbel- und Nockenwelle eingestellt. Bei heutigen gängigen Nockenwellenverstellsystemen wird der Rotor gegenüber dem Stator hydraulisch verdreht.

Eine technische Möglichkeit der Verbindung des Nockenwellenverstellsystems mit der Kurbelwelle sieht eine Zentralschraube vor, die über den Stator den darin angeordneten Rotor gegen eine Endfläche der Nockenwelle presst. Die Zentralschraube greift hierzu in ein Innengewinde der Nockenwelle ein.

Ein solches Nockenwellenverstellsystem, wobei die Verbindung mit der Nockenwelle mittels einer Zentralschraube vorgenommen ist, ist beispielsweise in der DE 10 2006 036 034 A1 vorgeschlagen. Die Stirnseiten der Nockenwelle und des Antriebselements des Nockenwellenverstellsystems besitzen mikroskopische oder makroskopische Unebenheiten, so dass zusätzlich zu einem Kraftschluss ein Formschluss zur Übertragung der Antriebsmomente hergestellt ist.

Zur Erhöhung der Haftreibung zwischen den kraftschlüssig verbundenen Bauteilen werden auch Reib- oder Klemmscheiben eingesetzt, deren Material oder deren Oberfläche den Reib- oder Kontaktpartnern entsprechend gewählt ist. Durch eine Klemmscheibe kann die zur Kopplung notwendige Normalkraft und damit die Belastung der verspannten Bauteile verringert werden.

Bekannte Reib- oder Klemmscheiben sind beispielsweise als dünne Stahlfolien mit einer reibungserhöhenden und/oder verschleißbeständigen Hartstoffbeschichtung ausgebildet. Hartstoffbeschichtungen sind beispielsweise aus der DE 10 2008 013 966 A1 oder aus der DE 19 850 048 A1 bekannt.

Am kostengünstigsten erfolgt die Montage einer Klemmscheibe, nachdem die Nockenwellenverstelleinheit bereits zusammengefügt ist. Die Klemmscheibe wird dazu dem im Stator befindlichen Rotor nockenwellenseitig aufgelegt. Die Nockenwellenverstelleinheit mit aufgelegter Klemmscheibe wird dann über eine Zentraleschraube mit der Nockenwelle verbunden.

Für die Übertragung des Lastmomentes und der Sicherstellung der axialen Position der Nockenwellenverstelleinheit zum Nockenwellenflansch ist genau eine Klemmscheibe vorzusehen, auf die die Geometrie der Bauteile abgestimmt ist. Über diese Geometrie ergibt sich nach erfolgter Montage die gewünschte Normalkraft auf die Klemmscheibe, so dass eine kraft- oder reibschlüssige Verbindung der Nockenwellenverstelleinheit mit der Nockenwelle sichergestellt ist. Eine derartige Klemmscheibe weist beispielsweise eine Dicke zwischen 0,1 und 1,0 mm auf. Es kann daher bei der Montage leicht zu Fehlern derart kommen, dass keine oder mehrere Klemmscheiben eingebracht werden. Dies führt unerwünschterweise zu einer Funktionsunfähigkeit des Nockenwellenverstellsystems.

Weiter muss beim Transport der vormontierten Nockenwellenverstelleinheit zum Motor und zur Montage auf der Nockenwelle die eingebrachte Klemmscheibe möglichst fixiert bleiben. Andererseits stellt die Klemmscheibe ein Verschleißteil dar, so dass auch eine möglichst einfache Demontierbarkeit gegeben sein muss.

### Aufgabe der Erfindung

Aufgabe der Erfindung ist es, eine Klemmscheibe der eingangs genannten Art sowie eine Nockenwellenverstelleinheit mit eingesetzter Klemmscheibe anzugeben, wobei eine möglichst einfache Montagekontrolle gegeben ist. Weiterhin ist es eine Aufgabe der Erfindung, ein entsprechendes Verfahren zur Kontrolle der Montage der Klemmscheibe in der Nockenwellenverstelleinheit anzugeben.

### Lösung der Aufgabe

Die gestellte Aufgabe wird erfindungsgemäß gelöst durch eine Klemmscheibe zur kraftschlüssigen Verbindung von Bauteilen in einem Nockenwellenverstellsystem, die einen im Wesentlichen kreisringförmigen Grundkörper mit wenigstens einer Reibfläche zu einem Kontaktpartner aufweist. Dabei ist vorgesehen, dass der Grundkörper durch eine Materialaussparung axial durchbrochen ist.

Die Erfindung geht dabei in einem ersten Schritt von der Überlegung aus, dass eine montierte Klemmscheibe durch eine Abstandsänderung gegenüber dem Rotor feststellbar ist. Über eine solche Messung kann während der Montage kontrolliert werden, ob eine, mehrere oder keine Klemmscheiben aufgebracht sind. Problematisch ist hierbei jedoch die Festlegung eines geeigneten Bezugspunktes zur Messung. Ist beispielsweise der Innendurchmesser des Rotors, dem die Klemmscheibe aufliegt, größer als der Innendurchmesser der Klemmscheibe, so fehlt ein Bezugspunkt, um die Dicke der aufgebrachten Klemmscheibe als Abstandsänderung sicher bestimmen zu können.

In einem zweiten Schritt geht die Erfindung nun von der Überlegung aus, die Auflagefläche des Rotors für eine Dicken- bzw. Abstandsmessung trotz aufliegender Klemmscheibe zugänglich zu machen. Dies geschieht dadurch, dass der Grundkörper der Klemmscheibe durch eine Materialaussparung axial durchbrochen ist. Durch einen solchen Durchbruch hindurch kann ein Abstand zur Auflagefläche des Rotors sicher gemessen werden. Durch eine Abstandsmessung gegenüber der Klemmscheibe neben dem Durchbruch kann dann auf die Dicke der montierten Klemmscheibe geschlossen werden. Insbesondere wird es hierdurch möglich festzustellen, ob genau eine Klemmscheibe, keine oder mehrere aufgebracht sind.

Die beiden benachbarten Abstandsmessungen im Durchbruch und auf der Klemmscheibe können leicht von der Seite der Nockenwelle aus vorgenommen werden. Dort weist die Nockenwellenverstelleinheit natürlicherweise eine Bohrung zur Durchführung der Nockenwelle auf. Über diese Bohrung ist ein freier Zugang zumindest auf einen Teilbereich der Klemmscheibe gewährleistet.

Die Materialaussparung kann als eine Freistellung, als ein Durchbruch, als eine Bohrung oder als eine Einbuchtung im Grundkörper ausgebildet sein. Die Materialaussparung ist so zu dimensionieren, dass durch sie hindurch die Abstandsmessung auf die darunterliegende Oberfläche des Rotors vorgenommen werden kann. Wird beispielsweise ein mechanischer Messtaster zur Abstandsmessung eingesetzt, so ist die Materialaussparung so zu bemessen, dass der Messtaster durch sie hindurch die Oberfläche des Rotors erreicht. Erfolgt eine Abstandsmessung andererseits über eine Laufzeitmessung, insbesondere mittels Laserstrahlung, so kann die Dimension der Materialaussparung kleiner gewählt werden.

Bevorzugt ist die Materialaussparung als eine Einbuchtung am Innenumfang des Grundkörpers ausgebildet. Hierdurch bleibt eine einfache Herstellung der Klemmscheibe ermöglicht. Zudem ist eine freie Zugänglichkeit der Materialaussparung zur Abstandsmessung von der Nockenwellenseite aus gewährleistet.

Die Klemmscheibe selbst ist beispielsweise aus einem Stahl gefertigt. Auf den Kontaktflächen kann eine Reib-, Haft- oder Hartschicht aufgebracht sein. Über diese Schicht ist insbesondere auch über Mikro- oder Makrorauigkeiten ein Formschluss zum Kontakt- oder Reibpartner hergestellt. Geeignet sind keramische Schichten, Nitride oder Carbide. Im Übrigen ist es für die Erfindung nicht ausgeschlossen, dass zusätzlich zu einer kraftschlüssigen Verbindung ein Formschluss zwischen der Klemmscheibe, dem Rotor und/oder der Nockenwelle vorliegt, um eine drehfeste Anbindung zu gewährleisten. Beispielsweise kann die Klemmscheibe auf der Rotor- oder der Nockenwellenseite mit einer entsprechenden Geometrie drehfest in einen Mehrkant eingesetzt sein.

In einer weiter vorteilhaften Ausgestaltung umfasst der Grundkörper der Klemmscheibe ein Positionierungsmittel, welches in einer vorgegebenen Winkellage zur Materialaussparung angeordnet ist. Soll eine Abstandsmessung zur Oberfläche des Rotors durch die Materialaussparung der Klemmscheibe hindurch vorgenommen werden, so empfiehlt sich für eine einfache Handhabung dieses Kontrollvorganges, eine definierte Winkellage der Materialaussparung gegenüber der Nockenwellenverstelleinheit vorzusehen. Zur Abstandsmessung wird zunächst die vormontierte Nockenwellenverstelleinheit in ihrer Winkellage gegenüber dem äußeren Messsystem ausgerichtet. Über das Positionierungsmittel ist dann eine definierte Winkellage der eingesetzten Klemmscheibe gegenüber der Nockenwellenverstelleinheit realisiert. Da Positionierungsmittel und Materialaussparung zueinander ebenfalls eine definierte Winkellage aufweisen, befindet sich bei ausgerichteter Nockenwellenverstelleinheit die Materialaussparung der Klemmscheibe ebenfalls in einer definierten Winkelposition zum äußeren Messsystem. Sensoren zur Abstandsmessung brauchen daher zur Montagekontrolle nicht mehr justiert werden.

Das Positionierungsmittel ist bevorzugt als eine Positioniernase ausgebildet. In einer besonders bevorzugten Ausgestaltung erstreckt sich diese Positioniernase am Außenumfang radial nach außen. Eine derartige Positioniernase kann beispielsweise in eine entsprechende Ausnehmung oder Vertiefung des Rotors eingebracht werden, wodurch die Klemmscheibe gegenüber dem Rotor in eine definierte Ausgangslage gebracht ist. Dabei ist davon auszugehen, dass sich in der montierten Nockenwellenverstelleinheit der Rotor stets in einer vorgegebenen Drehposition befindet.

Anstelle von Positioniernasen können auch Rast-, Steck- oder sonstige Kopplungsmittel vorgesehen sein, die mit komplementären Elementen des Rotors koppeln. Insbesondere kann der Rotor auch eine Vertiefung aufnehmen, in die eine geometrisch in der Form angepasste Klemmscheibe teilweise eingesenkt werden kann.

Zweckmäßigerweise umfasst der Grundkörper zur Demontage der Klemmscheibe am Innenumfang eine Abflachung. Mit einem geeigneten Werkzeug wird die Klemmscheibe mittels der Abflachung vom Rotor abgehoben und zur Nockenwellenseite hin entnommen. Bevorzugt ist hierbei die Abflachung gegenüber dem Positionierungsmittel angeordnet

Vorteilhafterweise sind die Einbuchtung und die sich radial nach außen erstreckende Positioniernase an gleicher Winkelposition des Grundkörpers angeordnet. Auf diese Weise wird eine Materialschwächung der Klemmscheibe infolge der Materialaussparung vermieden.

Die Aufgabe wird weiter erfindungsgemäß durch eine Nockenwellenverstelleinheit für eine Brennkraftmaschine gelöst, die einen innerhalb eines Stators drehbar gelagerten Rotor umfasst, wobei eine Klemmscheibe der vorbeschriebenen Art auf der der Nockenwelle zugewandten Seite des Rotors positioniert ist.

Weitere vorteilhafte Ausgestaltungen finden sich in den auf eine Nockenwellenverstelleinheit gerichteten Unteransprüchen. Dabei können die zur Klemmscheibe genannten Vorteile sinngemäß auf die Nockenwellenverstelleinheit übertragen werden.

In einer Ausgestaltungsvariante der Nockenwellenverstelleinheit ist der Innendurchmesser des Rotors größer als der Innendurchmesser des Grundkörpers der Klemmscheibe. Durch diese übliche Geometrie wird es nicht möglich, eine Abstandsmessung zur Oberfläche des Rotors vorzunehmen, wenn die Klemmscheibe aufgelegt ist. Ebenso ist eine solche Messung nicht möglich, wenn der Innendurchmesser oder ein innerer Abschnitt des Rotors aufgrund sonstiger spezifisch gegebener Ausgestaltungen der Nockenwellenverstelleinheit nicht frei zugänglich ist. Eine solche Abstandsmessung ist durch die Materialaussparung der vorbeschriebenen Klemmscheibe hindurch jedoch ermöglicht, wodurch sich eine einfache Montagekontrolle bezüglich der Klemmscheibe ergibt.

In einer weiter vorteilhaften Ausgestaltung übergreift der Rotor in axialer Richtung zumindest abschnittsweise die Klemmscheibe, wobei eine sich radial nach außen erstreckende Positioniernase der Klemmscheibe in eine Vertiefung des übergreifenden Abschnitts des Rotors eingesetzt ist. Durch die radiale Einführung der Positioniernase in die entsprechende Vertiefung des übergreifenden Rotorabschnitts bleibt eine leichte Montage der Klemmscheibe gewährleistet. Zugleich ist die Klemmscheibe nach Montage winkeltreu zum Rotor und über dessen im vormontierten Zustand vorgegebenen festen Drehlage gegenüber dem Stator auch winkeltreu zur Nockenwellenverstelleinheit insgesamt positioniert.

In einer weiter bevorzugten Ausgestaltungsvariante umfasst der Stator nockenwellenseitig einen Seitendeckel mit einer axialen Bohrung zur Aufnahme der Nockenwelle. Ist der Innendurchmesser der Bohrung kleiner gewählt als der größte umschriebene Außendurchmesser der Klemmscheibe, so ist die Klemmscheibe bevorzugt in einen Hinterschnitt des Seitendeckels eingesetzt. Zur Montage wird die Klemmscheibe unter Verbiegung durch die Bohrung dem Rotor zugeführt. Nach Auflage auf dem Rotor erstreckt sich dann die Klemmscheibe in radialer Richtung über den Hinterschnitt des Seitendeckels hinaus, wodurch eine Verliersicherheit während des Transports gegeben ist. Der Seitendeckel steht der Klemmscheibe nockenwellenseitig im Weg. Dabei ist vorteilhafterweise die Klemmscheibe an axial überstehenden Rotorabschnitten formschlüssig verrastet, oder radial reibschlüssig verklemmt.

Weiter wird die Aufgabe erfindungsgemäß gelöst durch ein Verfahren zur Kontrolle der Montage einer Klemmscheibe in einer Nockenwellenverstelleinheit. Zur Kontrolle der Montage der Klemmscheibe ist hierbei vorgesehen, die Nockenwellenverstelleinheit zunächst in der Winkellage auszurichten, anschließend die Klemmscheibe auf den Rotor nockenwellenseitig aufzubringen, nockenwellenseitig eine Abstandsdifferenz zwischen der Oberfläche der Klemmscheibe und der durch die Materialaussparung der Klemmscheibe erfassten Oberfläche des Rotors zu messen, die gemessene Abstandsdifferenz mit einer Solldicke der Klemmscheibe zu vergleichen und bei Feststellen einer Abweichung der Abstandsdifferenz von der Solldicke außerhalb eines Toleranzwertes die vormontierte Nockenwellenverstelleinheit auszusortieren.

Um bei ausgerichteter Nockenwellenverstelleinheit in einem äußeren Messsystem eine einfache Überprüfung der montierten Klemmscheibe zu ermöglichen, wird die Klemmscheibe wie vorbeschrieben anhand des Positionierungsmittels vorteilhafterweise mit definierter Winkellage dem Rotor aufgelegt. In einer weiter bevorzugten, weil kostengünstigen und einfachen Variante wird die Abstandsdifferenz mittels eines in der Winkellage ausgerichteten Messtasters durch die Bohrung des Seitendeckels hindurch gemessen.

### Kurze Beschreibung der Zeichnung

Ausführungsbeispiele der Erfindung werden anhand einer Zeichnung näher erläutert. Dabei zeigen:
- Fig. 1: eine Klemmscheibe mit einer Einbuchtung am Innenumfang zur Durchführung einer Abstandsmessung,
- Fig. 2: in einem Querschnitt eine Nockenwellenverstelleinheit mit einem Rotor und einem Stator, wobei dem Rotor eine Klemmscheibe gemäß Fig. 2 aufgelegt ist, und
- Fig. 3: eine Detailansicht der Ausbuchtung der Klemmscheibe.

### Ausführliche Beschreibung der Zeichnung

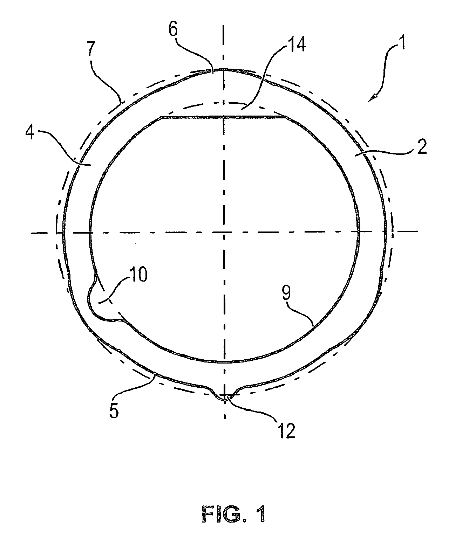

Fig. 1 zeigt eine Klemmscheibe 1 zu einer form- und/oder kraftschlüssigen Kopplung einer Nockenwellenverstelleinheit mit einer Nockenwelle einer Brennkraftmaschine. Die Klemmscheibe 1 umfasst einen im Wesentlichen kreisringförmigen Grundkörper 2, auf dem eine reibungserhöhende Hartschicht 4 aufgebracht ist. Der Außenumfang des Grundkörpers 2 weicht von einer Kreisform geringfügig ab. In einem Winkelabstand von jeweils 120° sind insgesamt drei Ausbuchtungen 6 vorgesehen. Der größte umschriebene Durchmesser 7 des Grundkörpers 2 resultiert aus der radialen Ausdehnung der Ausbuchtungen 6.

Am Innenumfang 9 des Grundkörpers 2 ist der Grundkörper 2 durch eine Materialaussparung 10 etwa an der Acht-Uhr-Position axial durchbrochen. Durch diese Materialaussparung 10 hindurch ist aus axialer Richtung eine Abstandsmessung bezüglich der Auflagefläche der Klemmscheibe 10 ermöglicht. Am Außenumfang 5 umfasst der Grundkörper 2 weiter eine sich radial nach außen erstreckende Positioniernase 12. Die Positioniernase 12 ist an der Sechs-Uhr-Position angeordnet. Positioniernase 12 und Materialaussparung 10 sind in einer definierten Winkellage zueinander angeordnet.

Gegenüber der Positioniernase 12 weist der Innenumfang 9 des Grundkörpers 2 eine Abflachung 14 auf. Über diese Abflachung 14 ist eine relativ einfache Demontage der Klemmscheibe 1 von der Unterlage möglich. Mittels eines geeigneten Werkzeugs wird die Klemmscheibe 1 an der Abflachung 14 ausgehebelt, so dass ein Abziehen der Positioniernase 12 aus der komplementären Vertiefung möglich wird.

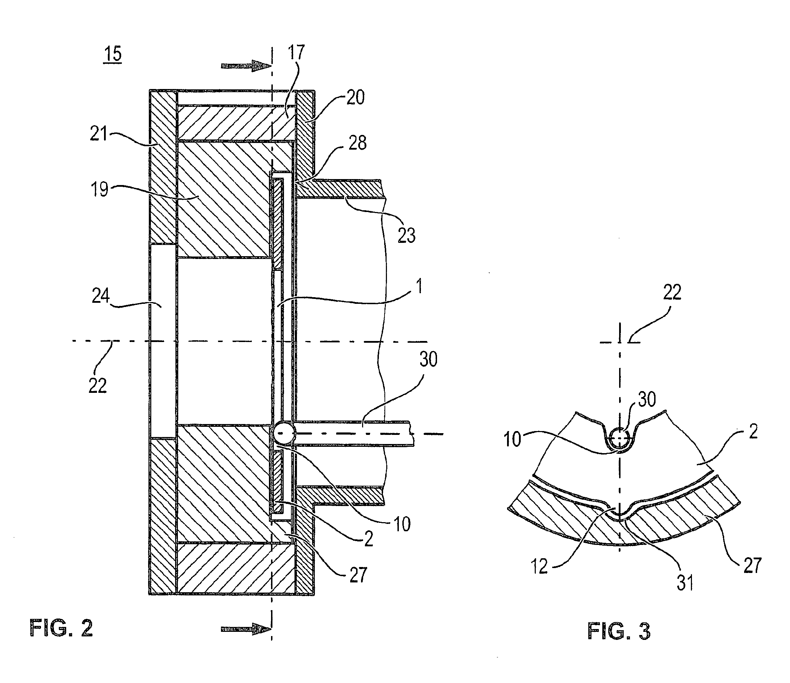

Aus dem in Fig. 2 gezeigten Querschnitt einer Nockenwellenverstelleinheit 15 wird die Lage der montierten Klemmscheibe 1 gemäß Fig. 1 ersichtlich. Die Nockenwellenverstelleinheit 15 umfasst einen Stator 17, in dem ein Rotor 19 drehbar gelagert ist. Der Stator 17 weist einen Seitendeckel 20 sowie einen Dichtdeckel 21 auf. Stator 17 und Rotor 19 rotieren gemeinsam gegenüber einer Zentralachse 22.

Der Seitendeckel 20 umfasst eine Bohrung 23, über die eine nicht dargestellte Nockenwelle aufgenommen werden kann. Zur Montage der Nockenwellenverstelleinheit 15 ist in den Dichtdeckel 21 eine weitere Bohrung 24 eingebracht. Über diese Bohrung 24 wird eine Zentralschraube eingeführt, die in eine Gewindebohrung auf der Stirnfläche der Nockenwelle eindrehbar ist. Durch Eindrehen der Zentralschraube wird die Nockenwellenverstelleinheit 15 insgesamt gegen die Stirnfläche der Nockenwelle verschraubt.

Auf der der Nockenwelle zugewandten Seite des Rotors 19 ist eine Klemmscheibe 1 ähnlich Fig. 1 aufgebracht. Beim Einschrauben der Zentralschraube wird eine Normalkraft auf die Kontaktflächen zwischen Rotor und Klemmscheibe einerseits und zwischen Klemmscheibe und Stirnfläche der Nockenwelle andererseits erzeugt. Über diese Normalkraft erfolgt eine kraft- oder reibschlüssige Verbindung des Rotors 19 mit der Stirnfläche der Nockenwelle, wobei die Klemmscheibe 1 reibungserhöhend zwischen Rotor 19 und Nockenwelle eingefügt ist.

Es wird erkennbar, dass der in Fig. 2 sichtbare Außendurchmesser der Klemmscheibe 1 größer als der Innendurchmesser der Bohrung 23 des Seitendeckels 20 ist. Zur Montage wird die Klemmscheibe 1 über die Bohrung 23 unter Verbiegung eingeführt. Hinter dem Hinterschnitt 28 des Seitendeckels 20 verrastet somit die Klemmscheibe 1 verliersicher.

Der Innenumfang 9 des Grundkörpers 2 der Klemmscheibe 1 erstreckt sich radial über den Innenumfang des Rotors 19 hinaus. Eine nockenwellenseitige Abstandsmessung zur Oberfläche des Rotors 19 ist somit grundsätzlich nicht möglich. Aus diesem Grund weist der Grundkörper 2 der Klemmscheibe 1 eine Einbuchtung 10 an seinem Innenumfang 9 auf, so dass hierdurch für einen Messtaster 30 Zugang zur Oberfläche des Rotors 19 geschaffen ist.

Zu einer winkelgetreuen Positionierung der Klemmscheibe 1 gegenüber der Nockenwellenverstelleinheit 15 umfasst der Grundkörper entsprechend Fig. 1 eine Positioniernase 12. Diese Positioniernase 12 ist in eine entsprechende Vertiefung an axial überstehenden Abschnitten 27 des Rotors 19 eingesetzt.

In Fig. 3 ist in einem Querschnitt senkrecht zur Zentralachse 22 eine Detailansicht der Materialaussparung 10 des Grundkörpers 2 gezeigt. Man erkennt, dass der Messtaster 30 die Materialaussparung 10 durchsetzt, um einen Abstand zur Oberfläche des Rotors 19 erfassen zu können. Entsprechend Fig. 3 ist eine Positioniernase 12 des Grundkörpers 2 an gleicher Winkellage wie die Materialaussparung 10 angeordnet. Es wird deutlich, dass bei einer solchen Ausführungsvariante keine Materialschwächung im Grundkörper 2 auftritt.

Die sich radial nach außen erstreckende Positioniernase 12 des Grundkörpers 2 taucht im montierten Zustand in eine Vertiefung 31 des axial überstehenden Abschnitts 27 des Rotors 19 ein.

### Liste der Bezugszahlen

- 1: Klemmscheibe
- 2: Grundkörper
- 4: Hartfläche
- 5: Außenumfang
- 6: Ausbuchtungen
- 7: Größter umschriebener Durchmesser
- 9: Innenumfang
- 10: Materialaussparung
- 12: Positioniernase
- 14: Abflachung
- 15: Nockenwellenverstelleinheit
- 17: Stator
- 19: Rotor
- 20: Seitendeckel
- 21: Dichtdeckel
- 22: Zentralachse
- 23: Bohrung
- 24: Bohrung
- 27: Abschnitt
- 28: Hinterschnitt
- 30: Messtaster
- 31: Vertiefung

## Patentansprüche

1. Nockenwellenverstelleinheit (15) für eine Brennkraftmaschine, mit einem innerhalb eines Stators (17) drehbar gelagerten Rotor (19) und einer Klemmscheibe (1), welche auf der der Nockenwelle zugewandten Seite des Rotors (19) zur form- und/oder kraftschlüssigen Kopplung der Nockenwellenverstelleinheit (15) mit der Nockenwelle positioniert ist, wobei die Klemmscheibe (1) einen im Wesentlichen kreisringförmigen Grundkörper (2) aufweist, der Kontaktflächen zum Rotor (19) der Nockenwellenverstelleinheit (15) und zur Stirnfläche der Nockenwelle hat, wobei auf diese Kontaktflächen eine Normalkraft erzeugt werden kann, wobei durch diese Normalkraft eine kraftschlüssige Verbindung zwischen dem Rotor (19) und der Stirnfläche der Nockenwelle erfolgen kann, wobei die Klemmscheibe (1) mit einer Schicht mit Mikro- oder Makrorauigkeiten zur Herstellung eines Formschlusses mit dem Kontaktpartner versehen ist, **dadurch gekennzeichnet, dass** der Grundkörper (2) durch eine Materialaussparung (10) axial durchbrochen ist und der Grundkörper (2) weiter ein Positionierungsmittel (12) umfasst, welches in einer vorgegebenen Winkellage zur Materialaussparung (10) angeordnet ist, wobei das Positionierungsmittel (12) eine definierte Winkellage der Klemmscheibe (1) gegenüber der Nockenwellenverstelleinheit (15) realisiert.

2. Nockenwellenverstelleinheit (15) nach Anspruch 1, **dadurch gekennzeichnet, dass** der Grundkörper (2) der Klemmscheibe (1) am Innenumfang (9) eine Abflachung (14) aufweist, welche zur Demontage der Klemmscheibe (1) vorgesehen ist.

3. Nockenwellenverstelleinheit (15) nach einem der vorhergehenden Ansprüche, **dadurch gekennzeichnet, dass** die Materialaussparung (10) als eine Einbuchtung am Innenumfang (9) des Grundkörpers (2) der Klemmscheibe (1) ausgebildet ist.

4. Nockenwellenverstelleinheit (15) nach einem der vorhergehenden Ansprüche, **dadurch gekennzeichnet, dass** das Positionierungsmittel als eine Positioniernase (12) ausgebildet ist.

5. Nockenwellenverstelleinheit (15) nach Anspruch 4, **dadurch gekennzeichnet, dass** sich die Positioniernase (12) am Außenumfang (5) radial nach außen erstreckt.

6. Nockenwellenverstelleinheit (15) nach Anspruch 3 und Anspruch 5, **dadurch gekennzeichnet, dass** die Einbuchtung und die sich radial nach außen erstreckende Positioniernase (12) an gleicher Winkelposition des Grundkörpers (2) angeordnet sind.

7. Nockenwellenverstelleinheit (15) nach Anspruch 6 , **dadurch gekennzeichnet, dass** der Rotor (19) in axialer Richtung zumindest abschnittsweise die Klemmscheibe (1) übergreift, und dass die sich radial nach auβen erstreckende Positioniernase (12) der Klemmscheibe (1) in eine Vertiefung (31) des übergreifenden Abschnitts (27) des Rotors (19) eingesetzt ist.

8. Nockenwellenverstelleinheit (15) nach Anspruch 7, **dadurch gekennzeichnet, dass** der Stator (17) nockenwellenseitig einen Seitendeckel (20) mit einer axialen Bohrung (23) zur Aufnahme der Nockenwelle umfasst, dass der Innendurchmesser der Bohrung (23) kleiner als der größte umschriebene Außendurchmesser (7) der Klemmscheibe (1) ist, und dass die Klemmscheibe (1) in einen Hinterschnitt (28) des Seitendeckels (20) verliersicher eingesetzt ist.

9. Verfahren zur Überprüfung der Montage einer Klemmscheibe (1) in einer Nockenwellenverstelleinheit (15) nach einem der Ansprüche 1 bis 8, **gekennzeichnet durch** die Schritte
- Winkelausrichten der Nockenwellenverstelleinheit (15),
- nockenwellenseitiges Aufbringen der Klemmscheibe (1) auf den Rotor (19),
- nockenwellenseitiges Messen einer Abstandsdifferenz zwischen der Oberfläche der Klemmscheibe (1) und der **durch** die Materialaussparung (10) hindurch erfassten Oberfläche des Rotors (19),
- Vergleichen der gemessenen Abstandsdifferenz mit einer Solldicke der Klemmscheibe (1) und
- Aussortieren der Nockenwellenverstelleinheit (15) bei Feststellen einer Abweichung der Abstandsdifferenz von der Solldicke außerhalb eines Toleranzwertes.

10. Verfahren nach Anspruch 9, **dadurch gekennzeichnet, dass** die Klemmscheibe (1) anhand des Positionierungsmittels (12) mit definierter Winkellage dem Rotor (19) aufgelegt wird.

11. Verfahren nach Anspruch 9 oder 10, **dadurch gekennzeichnet, dass** die Abstandsdifferenz mittels eines in der Winkellage ausgerichteten Messtasters (30) durch die Bohrung (23) des Seitendeckels (20) hindurch gemessen wird.

## Claims

1. Camshaft adjusting unit (15) for an internal combustion engine, with a rotor (19) mounted rotatably inside a stator (17) and with a clamping disc (1) which is positioned on that side of the rotor (19) which faces the camshaft for the purpose of coupling the camshaft adjusting unit (15) to the camshaft positively and/or non-positively, the clamping disc (1) having an essentially annular basic body (2) which has contact faces with the rotor (19) of the camshaft adjusting unit (15) and with the end face of the camshaft, a normal force towards these contact faces being capable of being generated, a non-positive connection between the rotor (19) and the end face of the camshaft being capable of taking place as a result of this normal force, and the clamping disc (1) being provided with a layer having micro- or macro-roughnesses for making a positive connection with the contact partner, **characterized in that** the basic body (2) is pierced axially by a material clearance (10), and the basic body (2) comprises, further, a positioning means (12) which is arranged at a stipulated angular position with respect to the material clearance (10), the positioning means (12) implementing a defined angular position of the clamping disc (1) with respect to the camshaft adjusting unit (15).

2. Camshaft adjusting unit (15) according to Claim 1, **characterized in that** the basic body (2) of the clamping disc (1) has on the inner circumference (9) a flattening (14) which is provided for demounting the clamping disc (1).

3. Camshaft adjusting unit (15) according to either of the preceding claims, **characterized in that** the material clearance (10) is formed as an indentation on the inner circumference (9) of the basic body (2) of the clamping disc (1).

4. Camshaft adjusting unit (15) according to one of the preceding claims, **characterized in that** the positioning means is formed as a positioning nose (12).

5. Camshaft adjusting unit (15) according to Claim 4, **characterized in that** the positioning nose (12) extends radially outwards on the outer circumference (5).

6. Camshaft adjusting unit (15) according to Claim 3 and Claim 5, **characterized in that** the indentation and the positioning nose (12) which extends radially outwards are arranged in the same angular position of the basic body (2).

7. Camshaft adjusting unit (15) according to Claim 6, **characterized in that** the rotor (19) overlaps the clamping disc (1) at least partially in the axial direction, and **in that** the radially outward-extending positioning nose (12) of the clamping disc (1) is inserted into a depression (31) of the overlapping portion (27) of the rotor (19).

8. Camshaft adjusting unit (15) according to Claim 7, **characterized in that** the stator (17) comprises on the camshaft side a side cover (20) with an axial bore (23) for receiving the camshaft, **in that** the inside diameter of the bore (23) is smaller than the largest circumscribed outside diameter (7) of the clamping disc (1), and **in that** the clamping disc (1) is inserted captively into an undercut (28) of the side cover (20).

9. Method for checking the mounting of a clamping disc (1) in a camshaft adjusting unit (15) according to one of Claims 1 to 8, **characterized by** the steps
- angular orientation of the camshaft adjusting unit (15),
- camshaft-side attachment of the clamping disc (1) to the rotor (19),
- camshaft-side measurement of a difference in distance between the surface of the clamping disc (1) and that surface of the rotor (19) which is detected through the material clearance (10),
- comparison of the measured difference in distance with a desired thickness of the clamping disc (1), and
- rejection of the camshaft adjusting unit (15) if a deviation of the difference in distance from the desired thickness outside a tolerance value is established.

10. Method according to Claim 9, **characterized in that** the clamping disc (1) is laid on the rotor (19) in a defined angular position with the aid of the positioning means (12).

11. Method according to Claim 9 or 10, **characterized in that** the difference in distance is measured through the bore (23) of the side cover (20) by means of a measuring stylus (30) oriented in the angular position.

## Revendications

1. Unité de réglage d'arbre à cames (15) pour un moteur à combustion interne, comprenant un rotor (19) monté à rotation à l'intérieur d'un stator (17) et un disque de serrage (1) qui est positionné du côté du rotor (19) tourné vers l'arbre à cames en vue de l'accouplement par engagement par correspondance de forme et/ou par force de l'unité de réglage d'arbre à cames (15) avec l'arbre à cames, le disque de serrage (1) présentant un corps de base essentiellement annulaire circulaire (2), qui présente des surfaces de contact avec le rotor (19) de l'unité de réglage d'arbre à cames (15) et avec la surface frontale de l'arbre à cames, une force normale pouvant être produite sur ces surfaces de contact, une connexion par engagement par force entre le rotor (19) et la surface frontale de l'arbre à cames pouvant être produite par cette force normale, le disque de serrage (1) étant muni d'une couche pourvue de micro- ou de macro-rugosités pour établir un engagement par correspondance de forme avec le partenaire de contact, **caractérisée en ce que** le corps de base (2) est interrompu axialement par un évidement de matériau (10) et le corps de base (2) comprend en outre un moyen de positionnement (12) qui est disposé dans une position angulaire prédéfinie par rapport à l'évidement de matériau (10), le moyen de positionnement (12) réalisant une position angulaire définie du disque de serrage (1) par rapport à l'unité de réglage d'arbre à cames (15).

2. Unité de réglage d'arbre à cames (15) selon la revendication 1, **caractérisée en ce que** le corps de base (2) du disque de serrage (1) présente, au niveau de la périphérie intérieure (9), un méplat (14) qui est prévu pour le démontage du disque de serrage (1).

3. Unité de réglage d'arbre à cames (15) selon l'une quelconque des revendications précédentes, **caractérisée en ce que** l'évidement de matériau (10) est réalisé sous forme de creux au niveau de la périphérie intérieure (9) du corps de base (2) du disque de serrage (1).

4. Unité de réglage d'arbre à cames (15) selon l'une quelconque des revendications précédentes, **caractérisée en ce que** le moyen de positionnement est réalisé sous forme de nez de positionnement (12).

5. Unité de réglage d'arbre à cames (15) selon la revendication 4, **caractérisée en ce que** le nez de positionnement (12) s'étend radialement vers l'extérieur sur la périphérie extérieure (5).

6. Unité de réglage d'arbre à cames (15) selon la revendication 3 et la revendication 5, **caractérisée en ce que** le creux et le nez de positionnement (12) s'étendant radialement vers l'extérieur sont disposés au niveau de la même position angulaire du corps de base (2).

7. Unité de réglage d'arbre à cames (15) selon la revendication 6, **caractérisée en ce que** le rotor (19) vient en prise par le dessus au moins en partie avec le disque de serrage (1) dans la direction axiale et **en ce que** le nez de positionnement (12), s'étendant radialement vers l'extérieur, du disque de serrage (1) est inséré dans un renfoncement (31) de la portion (27) venant en prise par le dessus du rotor (19).

8. Unité de réglage d'arbre à cames (15) selon la revendication 7, **caractérisée en ce que** le stator (17) comprend, du côté de l'arbre à cames, un couvercle latéral (20) avec un alésage axial (23) pour recevoir l'arbre à cames, **en ce que** le diamètre intérieur de l'alésage (23) est plus petit que le diamètre extérieur maximum inscrit (7) du disque de serrage (1) et **en ce que** le disque de serrage (1) est inséré de manière imperdable dans une contre-dépouille (28) du couvercle latéral (20).

9. Procédé de vérification du montage d'un disque de serrage (1) dans une unité de réglage d'arbre à cames (15) selon l'une quelconque des revendications 1 à 8, **caractérisé par** les étapes suivantes :
- orientation angulaire de l'unité de réglage d'arbre à cames (15),
- application, du côté de l'arbre à cames, du disque de serrage (1) sur le rotor (19),
- mesure, du côté de l'arbre à cames, d'une différence d'espacement entre la surface du disque de serrage (1) et la surface du rotor (19) détectée à travers l'évidement de matériau (10),
- comparaison de la différence d'espacement mesurée avec une épaisseur de consigne du disque de serrage (1), et
- élimination de l'unité de réglage d'arbre à cames (15) lors de la constatation d'un écart de la différence d'espacement de l'épaisseur de consigne en dehors d'une valeur de tolérance.

10. Procédé selon la revendication 9, **caractérisé en ce que** le disque de serrage (1) est appliqué avec une position angulaire définie sur le rotor (19) à l'aide du moyen de positionnement (12).

11. Procédé selon la revendication 9 ou 10, **caractérisé en ce que** la différence d'espacement est mesurée à travers l'alésage (23) du couvercle latéral (20) au moyen d'un capteur de mesure (30) orienté dans la position angulaire.
